# EUROPÄISCHE PATENTSCHRIFT

(11) **EP 2 291 275 B1**
(45) Veröffentlichungstag und Bekanntmachung des Hinweises auf die Patenterteilung: **10.09.2014**
(21) Anmeldenummer: 09741844.6
(22) Anmeldetag: 02.05.2009
(51) Int. Cl.: B29C 47/08, B29C 47/42

(54) **EXTRUDER-GETRIEBE**
EXTRUDER GEAR BOX
ENGRENAGE D'EXTRUDEUR

(30) Priorität: 07.05.2008 DE 102008022421
(43) Veröffentlichungstag der Anmeldung: 09.03.2011
(73) Patentinhaber: Blach Verwaltungs GmbH & Co. KG, 74348 Lauffen (DE)
(72) Erfinder: BLACH, Josef, A., A-6632 Ehrwald (AT)
(74) Vertreter: von Puttkamer, Nikolaus
(86) Internationale Anmeldenummer: PCT/EP2009/003160
(87) Internationale Veröffentlichungsnummer: WO 2009/135625

(56) Entgegenhaltungen:
- DE-A1- 10 315 200
- DE-C1- 3 325 782
- US-A- 4 297 917

## Beschreibung

Die vorliegende Erfindung bezieht sich auf ein Getriebe zum Antrieb eines Extruders nach dem Oberbegriff des Anspruchs 1.

Die Vorteile bei der Verarbeitung von Stoffen mit Doppelschnecken-Extrudern mit dichtkämmenden Wellen sind sowohl wirtschaftlich als auch verfahrenstechnisch unverzichtbar. Als ein wichtiges Kriterium für die Beurteilung des Leistungspotenzials derartiger Maschinen kann die Drehmomentdichte, d.h. der Quotient aus Drehmoment je Welle und dem in die dritte Potenz gesetzten Achsabstand herangezogen werden. Die Leistungsfähigkeit wird darüberhinaus durch die Drehzahl bestimmt.

Weiterhin ist es für die Verfahrenstechnik fundamental, wie der Übergang des Produkts auf die nachfolgende Schneckenwelle erfolgt, da je nach dem, ob sie im Gleich- oder Gegenlauf betrieben werden, im Zwickel zwischen den Bearbeitungselementen zweier benachbarter Wellen auch sehr unterschiedlich hohe Spreizkräfte generiert werden, die wiederum insbesondere den Verschleiß und die Drehzahl entscheidend beeinflussen.

Aus EP 0 962 298 geht ein Getriebe für einen Doppelschnecken-Extruder großer Leistung hervor, welches nach dem Einbau von Wendezahnrädern relativ einfach für gleich- oder gegensinnig drehende Schneckenwellen benutzt werden kann. Beispielhaft für den Stand der Technik für Getriebe für einen gegensinnig drehenden Schnecken-Extruder sind WO 2007/093228 A1 und EP 9 955 80 B1. In DE 33 28 782 C1 wird ein Getriebe für gleichsinnig drehende Doppelschnecken-Extruder beschrieben, in dem die Antriebswelle koaxial innerhalb einer Hohlwelle angeordnet ist und beide Wellen als Torsionswellen wirken, die an ihrem einen Ende über ein Getriebe verbunden sind, wobei zwei axial versetzte Ritzel auf der Hohlwelle angeordnet sind. Auch das Getriebe nach DE 26 28 387 sowie PCT/JP 93/01039 ist nur für gleichsinnig drehende Schneckenwellen nutzbar.

In jedem Fall ist den Schneckenwellen durch die Abtriebswellen des Getriebes ein höchstmögliches Drehmoment zur Verfügung zu stellen. Dabei ist bei gegebenen Achsabstand das Verhältnis des Schneckenaußendurchmessers (Da) zum Schneckeninnendurchmesser (Di) im Verfahrensteil so groß als möglich und der Durchmesser der Abtriebswellen bei höchstmöglich zulässiger Torsionsspannung so klein wie nötig zu wählen.

Für den Antrieb von kämmenden, insbesondere von dichtkämmenden Schneckenwellen wird darüber hinaus unter jeweils allen Lastbedingungen eine gleiche, geometrische Abtriebswinkellage der Abtriebswellen gefordert, damit das axiale Spiel der Schneckenwellen im koaxial angetriebenen Verfahrensteil möglichst klein gewählt werden kann, ohne dass eine mechanische Berührung der Schneckenflanken erfolgt.

Gegenüber Doppelschnecken-Extrudern haben Mehrwellen-Extruder mit mehreren längs eines Kreises mit gleichem Zentriwinkelabstand angeordneten achsparallelen Wellen den Vorteil, dass sie doppelt so viele Zwickel aufweisen, in denen das Produkt bei der Übergabe von Schnecken- oder sonstigen Bearbeitungselementen einer Welle zur nächsten besonders wirksam bearbeitet wird.

Aus DE 103 15 200 B4 ist bereits ein Getriebe für einen solchen Mehrwellen-Extruder mit gleichsinnig drehenden Wellen nach dem Oberbegriff des Anspruchs 1 bekannt. Dabei ist eine zentrale Antriebswelle vorgesehen, auf der die beiden mit den axial versetzten Abtriebsritzeln kämmenden Sonnenzahnräder vorgesehen sind. Um die Leistungsfähigkeit zu steigern, kämmen die Antriebsritzel zusätzlich mit innen verzahnten Hohlrädern, wobei die Hohlräder mit einer Außenverzahnung versehen sind, mit der ein Antriebsrad auf einer außenliegenden Antriebswelle kämmt, sodass jedes Hohlrad mit dem gleichen Drehmoment angetrieben wird und das Drehmoment jedes Abtriebsritzels über das Sonnenzahnrad und über das Hohlrad je zur Hälfte eingeleitet wird.

Die bekannten Getriebe haben sich insbesondere bei gleichsinnig drehenden Schneckenwellen für den Normalfall bewährt. Größere Drehzahlen und/oder Drehmomente können damit jedoch nicht realisiert werden, da sie dann entweder einen zu hohen Verschleiß aufweisen oder zu viel Spiel im Verfahrensteil benötigen und daher unwirtschaftlich arbeiten.

Aufgabe der Erfindung ist es ein Getriebe für einen Mehrwellen-Extruder mit dichtkämmenden Bearbeitungselementen bereit zu stellen, der ein hohes Leistungspotential aufweist.

Dies wird erfindungsgemäß mit dem im Anspruch 1 gekennzeichneten Getriebe erreicht. In den Unteransprüchen sind vorteilhafte Ausgestaltungen der Erfindung wiedergegeben.

Das erfindungsgemäße Getriebe ist als Antrieb mit einem oder mehreren Motoren für Mehrwellen-Extruder mit dichtkämmenden, gleich- oder gegensinnig drehenden Wellen geeignet, die zum Kraftausgleich im Getriebe und optimal bei Anordnung im geschlossenen Kreis auch im Verfahrensteil auf einem Teilkreis angeordnet sind.

Bei dem erfindungsgemäßen Getriebe ist das Sonnenzahnrad, in das die vom Verfahrensteil weg versetzten Abtriebsritzel eingreifen, mit einer Torsionshohlwelle drehfest verbunden, während das Sonnenzahnrad, in das die zum Verfahrensteil hin versetzten Abtriebsritzel eingreifen, mit einer Torsionsinnenwelle drehfest verbunden sind, die in der Torsionshohlwelle koaxial zu dieser angeordnet ist.

Dabei sind die Torsionshohlwelle und die Torsionsinnenwelle so ausgelegt, dass der durch die unterschiedliche Länge der Abtriebswellen hervorgerufene Unterschied des Torsionsverdrehwinkels durch eine unterschiedliche Torsion der Torsionshohlwelle gegenüber der Torsionsinnenwelle ausgeglichen wird. D.h. die unterschiedliche Torsion der Abtriebswellen wird durch die unterschiedliche Torsion der Torsionshohlwelle gegenüber der Torsionsinnenwelle kompensiert. Der Unterschied der Torsion der Abtriebswellen ist dadurch besonders groß ausgeprägt, weil sie aufgrund ihres geringen Abstandes dünn ausgebildet werden müssen.

Die unterschiedliche Torsion der Torsionshohlwelle gegenüber der Torsionsinnenwelle kann beispielsweise durch den Kreisringquerschnitt der Torsionshohlwelle gegenüber dem Kreisquerschnitt der vorzugsweise als Vollwelle ausgebildeten Torsionsinnenwelle eingestellt werden.

Damit ist bei höchster Leistungsfähigkeit des Getriebes nicht nur bei Teillast, sondern auch bei Leer- und Volllast eine winkelsynchrone Lage benachbarter Wellen gewährleistet und damit ein Verschleiß auch bei dichtkämmenden Bearbeitungselementen verhindert.

Die auf die Wellen des Verfahrensteils aufgesteckten Bearbeitungselemente können Schnecken- oder dergleichen Förderelemente, aber auch Knetblöcke, Schneckenelemente mit entgegengesetzter Förderrichtung und dergleichen sein.

Das erfindungsgemäße Getriebe ist sowohl für gleichsinnig drehende Wellen im Verfahrensteil geeignet, wie für ein Verfahrensteil, bei dem sich benachbarte Wellen gegensinnig drehen. Bei gleichsinnig drehenden Wellen sind dazu die Torsionshohlwelle und die Torsionsinnenwelle mit gleicher Winkelgeschwindigkeit in der gleichen Drehrichtung antreibbar, während bei gegensinnig drehenden Wellen die Torsionshohlwelle und die Torsionsinnenwelle mit gleicher Winkelgeschwindigkeit in entgegengesetzter Drehrichtung antreibbar ist.

Bei gegensinnig drehenden Wellen wird zwischen den Bearbeitungselementen mit wesentlich mehr Material ein größerer Druck entwickelt als bei gleichsinnig drehenden Wellen. Dadurch tritt bei gegensinnig drehenden Wellen bei gleicher Ausstoßleistung zwischen den Wellen eine wesentlich höhere Spreizkraft auf, die einen hohen Verschleiß zur Folge hätte. Demzufolge weisen Doppelschnecken-Extruder mit gegensinnigen Wellen gegenüber Doppelschnecken-Extrudern mit gleichsinnig drehenden Wellen eine um ein Vielfaches geringere Ausstoßleistung auf. Auf der anderen Seite sind gegensinnig drehende Extruder für bestimmte, beispielsweise hochdisperse Verfahrensaufgaben oder mit Nanopartikeln verstärkte Kunststoffe notwendig.

Bei einem Extruder mit mehreren längs eines Kreises angeordneten Wellen heben sich die Spreizkräfte zwischen benachbarten Wellen gegenseitig jedoch weitgehend auf. Damit kann ein Mehrwellen-Extruder mit dem erfindungsgemäßen Getriebe auch mit gegensinnig drehenden Wellen mit hoher Drehzahl und damit Ausstoßleistung betrieben werden.

Aufgrund ihres geringen Abstandes müssen die Abtriebswellen des Getriebes für den Mehrwellen-Extruder mit entsprechend geringem Durchmesser ausgebildet werden. Sie werden daher auf das äußerste belastet. Ein hohes Drehmoment ist daher nur erreichbar, wenn keine Querkräfte auf die Abtriebswellen einwirken. Vorzugsweise stehen daher sowohl die im Verfahrensteil zugewandten Abtriebsritzel wie die vom Verfahrensteil abgewandten Abtriebsritzel nicht nur mit dem Sonnenzahnrad, sondern auch mit einem zum Sonnenzahnrad koaxialen innen verzahnten Hohlrad in Eingriff, wobei sie vom innenverzahnten Hohlrad mit dem gleichen Drehmoment angetrieben werden wie vom Sonnenzahnrad. Damit heben sich die radialen Kräfte, die auf die Abtriebsritzel einwirken, gegenseitig auf.

Ein Antrieb des Sonnenzahnrades und des innenverzahnten Hohlrades mit gleicher Leistung lässt sich auf unterschiedlicher Weise verwirklichen. So können beispielsweise zwei getrennte Motoren mit entsprechender elektronischer Steuerung das Sonnenzahnrad und das innenverzahnte Hohlrad mit der gleichen Leistung antreiben. Ferner ist es möglich, zwischen dem Sonnenzahnrad und dem innenverzahnten Zahnrad eine mechanische Koordination vorzusehen, um das Drehmoment jeweils zur Hälfte auf das Sonnenrad und das innenverzahnte Hohlrad zu verteilen. Auf diese Weise kann die jeweils zugeführte Leistung bzw. das entsprechende Drehmoment von innen und/oder außen anteilig auf die axial versetzten Abtriebsritzel verzweigt werden.

Die Nullpunktpositionierung erfolgt mehrstufig und liegt zuerst in den Ritzelwellen selbst, sowie in den beiden vom Verfahrensteil weg oder zu ihm hin versetzten Zahnradsätzen, die über die Torsionshohlwelle und die Torsionsinnenwelle, welche gleichzeitig das Drehmoment je zur Hälfte teilen und an den freien Enden positioniert sind, mechanisch verbunden sind.

Bei gleichsinnig drehenden Wellen kann das durch oder über eine Reduzierzahnradstufe erfolgen und bei gegensinnig drehenden Wellen über zwei Zahnräder als Reduzierstufe, die mittels eines Wendegetriebes verbunden und/oder koordiniert von einem oder zwei Motoren angetrieben werden.

Erfolgt gleichzeitig ein Antrieb der Ritzelwellen über ein innenverzahntes Hohlrad mit Außenverzahnung als gleichzeitige Reduzierstufe, dann ist bei einmotorigem Antrieb zwischen Motor und je Reduzierstufe eine Torsionswelle vorgesehen, die das Drehmoment entsprechend aufteilen und übertragen kann.

Nachstehend ist die Erfindung anhand der beigefügten Zeichnung beispielhaft näher erläutert. Darin zeigen:
Figur 1 einen Längsschnitt durch den förderaufseitigen Abschnitt des Verfahrensteils eines Extruders;
Figur 2 einen Querschnitt entlang der Linie II-II in Figur 1;
Figur 3 einen Längsschnitt durch eine erste Ausführungsform des Getriebes für gegensinnig drehende Wellen mit Wendegetriebe sowie für einen oder mehrere Motoren;
Figur 4 einen Querschnitt entlang der Linie IV-IV in Figur 3;
Figur 5 eine gegenüber Figur 2 vergrößerte Darstellung von drei miteinander kämmenden Förderelementen auf gegensinnig umlaufenden Wellen;
Figur 6 einen Längsschnitt durch eine andere Ausführungsform des Getriebes für gegensinnig umlaufende Wellen und zwei gegensinnig drehende Antriebsmotoren oder mittels Drehrichtungsumkehr eines Motors für gleichsinnig drehende Wellen;
Figur 7 einen Querschnitt entlang der Linie VII-VII in Figur 6;
Figur 8 einen Längsschnitt durch eine erste Ausführungsform des Getriebes für gleichsinnig drehende Wellen und zwei Antriebsmotore über ein Reduziergetriebe; und
Figur 9 einen Längsschnitt durch eine weitere Ausführungsform des Getriebes für gleichsinnig drehende Wellen mit einem Antriebsmotor und einem Reduziergetriebe.

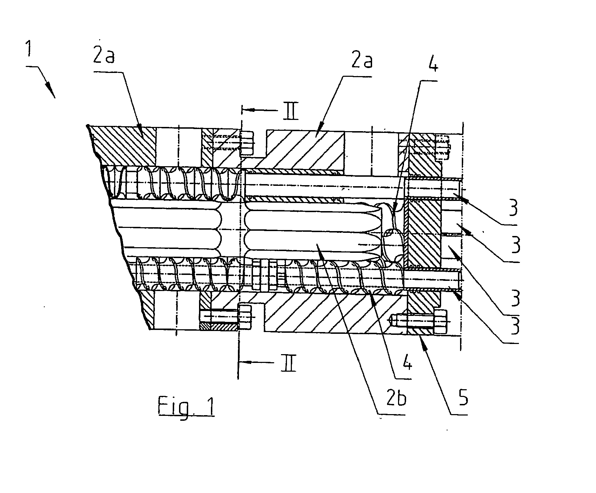

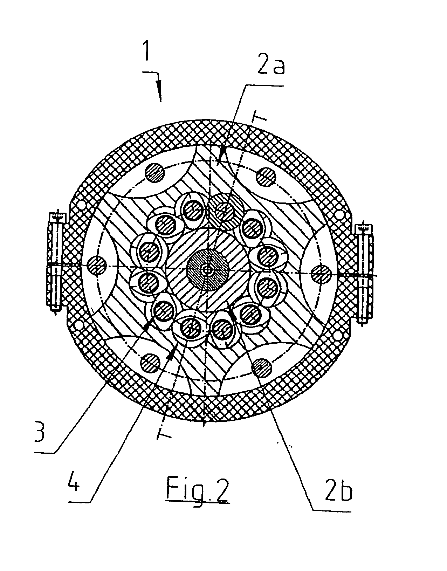

Gemäß Figur 1 und 2 weist das Verfahrensteil 1 des Extruders in einem Gehäuse 2a mit einem Kern 2b zwölf längs eines Kreises (Figur 2) mit gleichem Zentriwinkelabstand angeordnete achsparallele Wellen 3 auf, die mit Bearbeitungselementen 4 bestückt sind, wobei die Bearbeitungselemente 4 benachbarter Wellen 3 ineinander greifen.

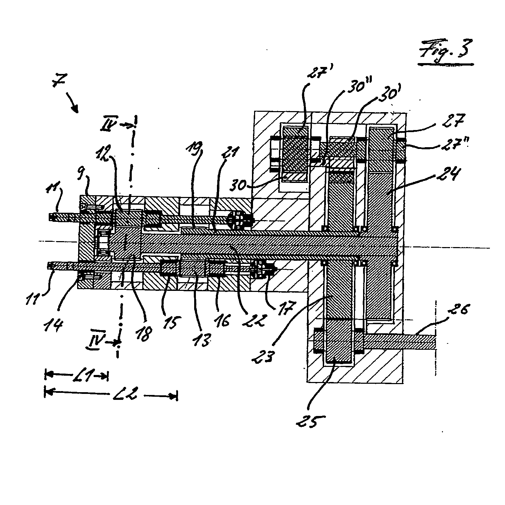

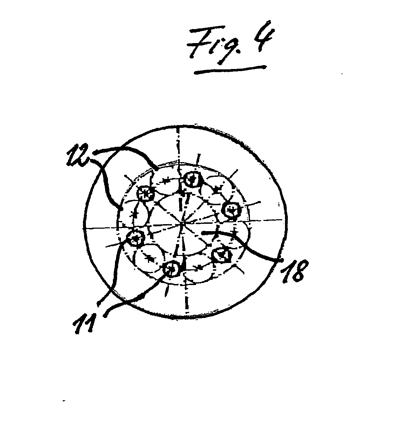

Das Verfahrensteil 1 ist förderaufseitig mit der Endplatte 5 verschlossen. Durch die Endplatte 5 erstrecken sich die Wellen 3, die von einem Verzweigungsgetriebe 7 gemäß Figur 3 und 4 sowie Figur 6 bis 9 gleichsinnig oder gegensinnig angetrieben werden.

Das Getriebe 7 gemäß Figur 3 weist eine Platte 9 auf, die mit der Endplatte 5 des Verfahrensteils 1 verbunden ist. Aus der Platte 9 erstrecken sich zwölf Abtriebswellen 11, die koaxial mit den zwölf Wellen 3 des Verfahrensteils 1 drehfest verbunden sind. Die Abtriebswellen 11 sind mit Abtriebsritzeln 12, 13 drehfest verbunden. Wegen des geringen Achsabstandes der Abtriebswellen 11 sind die Abtriebsritzel 12, 13 des Getriebes 1 benachbarter Wellen 11 axial versetzt angeordnet. D.h. die Ritzel 12 sind zu dem Verfahrensteil 1 hin und die Ritzel 13 von dem Verfahrensteil 1 weg versetzt angeordnet. Bei 14, 15, 16 und 17 sind die Abtriebswellen 11 drehbar gelagert.

Die Ritzel 12 kämmen mit einem zum Verfahrensteil 1 hin axial versetzten Sonnenzahnrad 18 und die Ritzel 13 mit einem vom Verfahrensteil 1 weg axial versetzten Sonnenzahnrad 19. Während das Sonnenzahnrad 19 mit einer Torsionshohlwelle 21 drehfest verbunden ist, ist das Sonnenzahnrad 18 mit einer als Vollwelle ausgebildeten Torsionsinnenwelle 22 drehfest verbunden, die in der Hohlwelle 21 koaxial zu derselben angeordnet ist.

Die Torsionshohlwelle 21 und die Torsionsinnenwelle 22 sind jeweils an ihrem vom Verfahrensteil 1 abgewandten Ende mit einem Zahnrad 23 bzw. 24 versehen. Das Zahnrad 23 kämmt mit einem Ritzel 25, das auf der Antriebswelle 26 des Getriebes 7 drehfest angeordnet ist, die von einem (nicht dargestellten) Motor angetrieben wird. Das Zahnrad 23 treibt das Zahnrad 24 an, wodurch die Torsionshohlwelle 21 und die Torsionsinnenwelle 22 gegensinnig angetrieben werden, sodass das dem Verfahrensteil 1 zugewandte Sonnenzahnrad 18 und die mit ihm in Eingriff stehenden Abtriebsritzel 12 einerseits und das von dem Verfahrensteil 1 abgewandte Sonnenrad 19 und die mit ihm in Eingriff stehenden Abtriebsritzel 13 andrerseits sich in entgegengesetzter Richtung drehen.

Zwischen den Zahnrädern 23 und 24 ist ein Wendegetriebe vorgesehen, das das Zahnrad 27 aufweist, das mit dem Zahnrad 24 kämmt und zusammen mit einem Zahnrad 27' auf der Welle 27'' sitzt, ferner die Zahnräder 30 und 30' auf der achsparallelen Welle 30'', wobei die Zahnräder 27' und 30 und die Zahnräder 23 und 30' miteinander in Eingriff stehen. An die Welle 27'' kann ein zweiter Antriebsmotor angeschlossen werden.

Die Länge L2 der Abtriebswellen 11 zwischen ihrem dem Verfahrensteil 1 zugewandten Ende und den Ritzeln 13 ist wesentlich größer als die Länge L1 der Abtriebswellen 11 zwischen ihrem dem Verfahrensteil 1 zugewandten Ende und den Ritzeln 12. So kann das Verhältnis L2: L1 beispielsweise etwa 1,5 bis 2,5 betragen.

Dies führt zu einem unterschiedlichen Verdrehwinkel an den dem Verfahrensteil 1 zugewandten Ende der Abtriebswellen 11 mit den Ritzeln 12 gegenüber den Abtriebswellen 11 mit den Ritzeln 13. Dadurch wird eine drehwinkelsynchrone Lage der Bearbeitungselemente 4 auf benachbarten Wellen 3 des Verfahrensteil 1 des Extruders verhindert, wenn sie durch das Getriebe 7 angetrieben werden, insbesondere bei Volllast, also bei Angriff eines hohen Dreh- oder Torsionsmoments an den Abtriebswellen 11.

Erfindungsgemäß sind daher die Torsionshohlwelle 21 und die Torsionsinnenwelle 22 so ausgebildet, dass die Torsionsinnenwelle 22 zwischen dem Sonnenzahnrad 18 und dem Zahnrad 24 einer größeren Torsion unterliegt als die Torsionshohlwelle 21 zwischen dem Sonnenzahnrad 19 und dem Zahnrad 23, und zwar in einem solchen Ausmaß, dass die größere Torsion der Abtriebswellen 11 mit den Ritzeln 13 gegenüber der Torsion der Abtriebswellen 11 mit den Ritzeln 12 kompensiert wird, also der durch die unterschiedliche Länge L1 bzw. L2 der Abtriebswellen 11 hervorgerufene unterschiedliche Torsionsverdrehwinkel durch die unterschiedliche Torsion der Torsionshohlwelle 21 gegenüber der Torsionsinnenwelle 22 ausgeglichen wird.

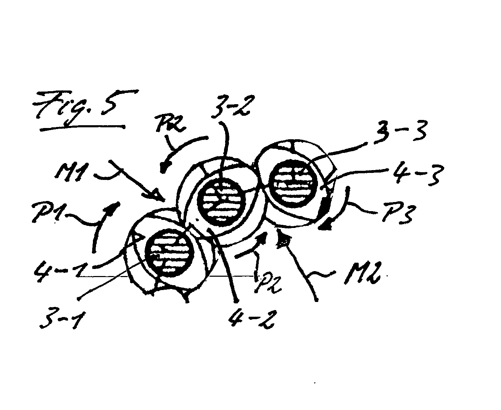

Damit wird erfindungsgemäß ein Mehrwellen-Extruder sehr hohe Leistungsfähigkeit bereit gestellt, insbesondere auch bei Gegenlauf. Denn im Gegensatz zu einem Doppelschnecken-Extruder wirken auf die Wellen eines Mehrwellen-Extruders durch den gegenseitigen Kraftausgleich zwischen den Bearbeitungselementen wesentlich geringer Spreizkräfte, wie aus Figur 5 ersichtlich.

Dabei ist in Figur 5 die Drehrichtung der gegenläufigen Wellen 3-1, 3-2 und 3-3 im Verfahrensteil 1 des Extruders durch die Pfeile P1, P2 bzw. P3 dargestellt, wodurch der durch die Pfeile M1 und M2 dargestellte Materialeinzug zwischen den Bearbeitungselementen 4-1, 4-2 und 4-3 entsteht. Wie ersichtlich, wird dadurch die Kraft, die der Materialeinzug M1 seitlich auf die Wellen 3-1 und 3-2 ausübt, also die Kraft, die die Wellen 3-1 und 3-2 auseinanderzuspreizen versucht, an der Welle 3-2 durch die Kraft weitgehend aufgehoben, die der Materialeinzug M2 zwischen den Wellen 3-2 und 3-3 auf die Welle 3-2 ausübt. Was am Beispiel der Welle 3-2 in Figur 5 dargstellt ist, gilt für alle übrigen Wellen 3 des Mehrwellen-Extruders. Der erfindungsgemäße Extruder besitzt damit auch bei Gegenlauf eine sehr hohe Ausstoßleistung.

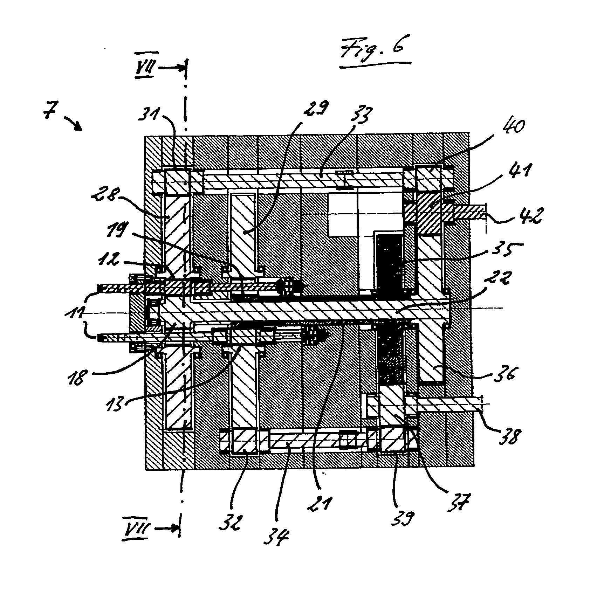

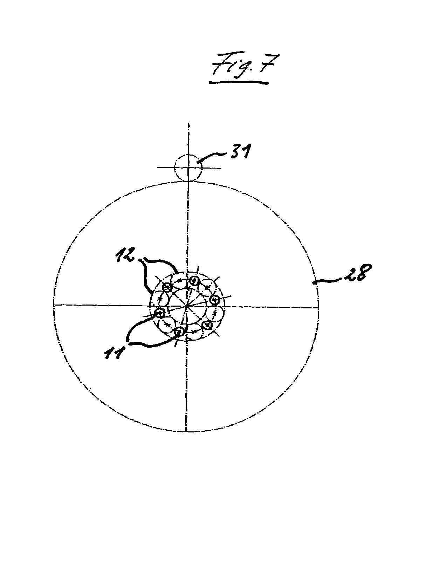

Bei der Ausführungsform nach Figur 6 und 7 werden die Torsionshohlwelle 21 und die Torsionsinnenwelle 22 und damit die Abtriebswellen 11 mit den Abtriebsritzeln 13 bzw. Abtriebswellen 11 mit den Abtriebsritzeln 12 ebenfalls in entgegengesetzter Drehrichtung angetrieben.

Die Abtriebsritzel 12 und 13 stehen dabei jeweils außer mit dem Sonnenzahnrad 18 bzw. 19 mit einem innenverzahnten Hohlrad 28 bzw. 29 in Eingriff. Die Ritzel 12, 13 werden damit sowohl von den Sonnenzahnrädern 18, 19 als auch von dem radial gegenüberliegend angeordneten umfassenden innenverzahnten Hohlrad 28 bzw. 29 angetrieben, wobei die Hohlräder 28 bzw.29 dazu ihrerseits entsprechend axial versetzt angeordnet sind.

Jedes Hohlrad 28, 29 ist mit einer Außenverzahnung versehen, mit der ein außenverzahntes Antriebszahnrad 31, 32 auf außenliegenden Antriebswellen 33 bzw. 34 kämmt. Dabei können auch jeweils mehrere, beispielsweise vier um den Umfang der Hohlräder 28, 29 versetzt angeordnete außenliegende Antriebswellen 33, 34 vorgesehen sein.

Die Torsionshohlwelle 21 ist zum Antrieb mit einem Zahnrad 35 und die Torsionsinnenwelle 22 mit einem Zahnrad 36 versehen.

Das Zahnrad 35 steht mit einem Ritzel 37 in Eingriff, das drehfest auf einer ersten Antriebswelle 38 sitzt, die von einem ersten (nicht dargestellten) Motor angetrieben wird. Das Ritzel 37 steht zugleich in Eingriff mit einem Zahnrad 39, das auf der außenliegenden Antriebswelle 34 drehfest angeordnet ist, um über das Antriebszahnrad 32 das Hohlrad 29 anzutreiben.

Demgegenüber steht das Zahnrad 36 in Eingriff mit einem Ritzel 41, das Zahnrad 36 mit einem Ritzel 41 in Eingriff, das drehfest auf einer zweiten Antriebswelle 42 sitzt, die von einem zweiten (nicht dargestellten) Motor angetrieben wird. Das Ritzel 41 steht zugleich in Eingriff mit dem Zahnrad 40, das auf der außenliegenden Antriebswelle 33 drehfest angeordnet ist, um über das Antriebszahnrad 31 das Hohlrad 28 anzutreiben.

Mit dem Getriebe nach Figur 6 und 7 können die Torsionshohlwelle 21 und die Torsionsinnenwelle 22 statt in entgegengesetzter Drehrichtung auch in gleicher Drehrichtung angetrieben werden. Dazu brauchen die Antriebswellen 38 und 42 statt in gleicher Drehrichtung lediglich in entgegengesetzter Drehrichtung umzulaufen.

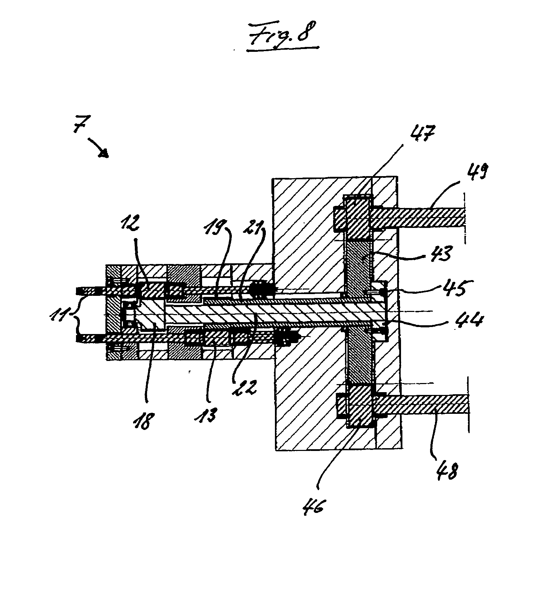

Demgegenüber sind bei der Ausführungsform nach Figur 8 die Torsionshohlwelle 21 und die Torsionsinnenwelle 22 nur in gleicher Drehrichtung antreibbar.

Dabei ist die Torsionshohlwelle 21 an der von dem Verfahrensteil 1 abgewandten Ende mit einem Zahnrad 43 drehfest verbunden. Ferner ist eine drehfeste Verbindung an dem von dem Verfahrensteil 1 abgewandten Ende zwischen der Torsionshohlwelle 21 und der Torsionsinnenwelle 22 vorgesehen. Dazu ist am Ende der Torsionsinnenwelle 22 ein Flansch 44 vorgesehen, der an dem mit der Torsionshohlwelle 21 drehfest verbundenen Zahnrad 43 mit Schraubbolzen 45 befestigt ist.

Das Zahnrad 43 kämmt mit Ritzeln 46, 47, die auf Antriebswellen 48, 49 sitzen, die von einem oder zwei (nicht dargestellten) Motoren angetrieben werden.

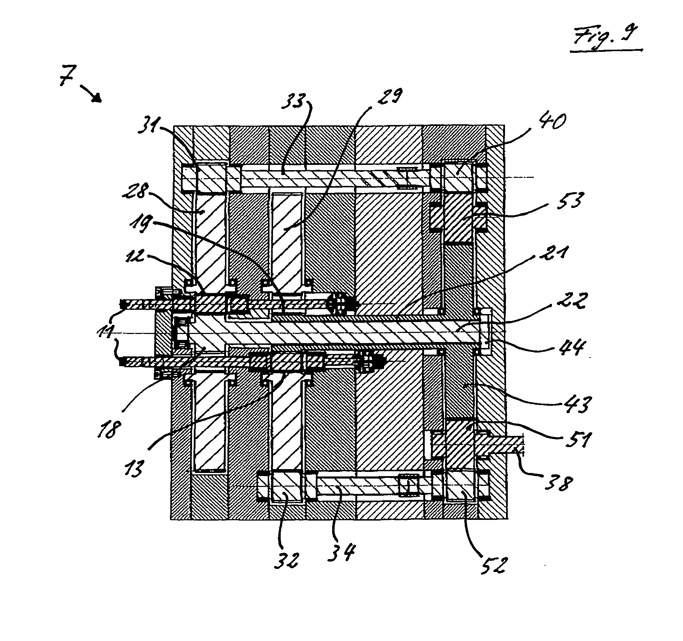

Die Ausführungsform nach Figur 9 ist ebenfalls für den Gleichlaufbetrieb bestimmt, also ein Getriebe, bei dem die Torsionshohlwelle 21 und die Torsionsinnenwelle 22 in gleicher Drehrichtung angetrieben werden.

Wie bei der Ausführungsform nach Figur 8 ist dabei die Torsionshohlwelle 21 an dem von dem Verfahrensteil 1 abgewandten Ende mit einem Zahnrad 43 drehfest verbunden, wobei zur Verbindung der Torsionshohlwelle 21 mit der Torsionsinnenwelle 22 wiederum am Ende der Torsionsinnenwelle 22 ein Flansch 44 vorgesehen ist, der an dem mit der Torsionshohlwelle 22 drehfest verbundenen Zahnrad 43 drehfest befestigt ist.

Um die radialen Kräfte aufzuheben, die auf die Abtriebsritzel 12, 13 einwirken, sind bei der Ausführungsform nach Figur 9 in Übereinstimmung mit der Ausführungsform nach Figur 6 innenverzahnte Hohlräder 28, 29 vorgesehen, in denen die Ritzel 12 bzw. 13 zusätzlich kämmen, ferner Antriebszahnräder 31, 32 auf außenliegenden Antriebswellen 33, 34, die mit der Außenverzahnung der Hohlräder 28, 29 kämmen.

Im Gegensatz zur Ausführungsform nach Figur 6 ist jedoch nur die eine Antriebswelle 38 vorgesehen, die von einem (nicht dargestellten) Motor angetrieben wird.

Dazu kämmt das Ritzel 51, das auf der einen Antriebswelle 38 sitzt, einerseits mit dem Zahnrad 43 und andrerseits mit dem Zahnrad 52 auf der außenliegenden Antriebswelle 34, über die das innenverzahnte Hohlrad 29 angetrieben wird, mit dem die Abtriebsritzel 13 in Eingriff stehen.

Zugleich steht das Zahnrad 43 in Eingriff mit dem Wendezahnrad 53, das mit dem Ritzel 40 auf der außenliegenden Antriebswelle 33 kämmt, über die das innenverzahnte Hohlrad 28 angetrieben wird, mit dem die Abtriebsritzel 12 in Eingriff stehen.

## Patentansprüche

1. Getriebe zum Antrieb eines Extruders, der ein Verfahrensteil (1) mit mehreren längs eines Kreises mit gleichem Zentriwinkelabstand angeordnete achsparallele Wellen (3) aufweist, die mit Bearbeitungselementen (4) drehfest verbunden sind, mit denen benachbarte Wellen (3) ineinandergreifen, wobei das Getriebe (7) Abtriebswellen (11) aufweist, die mit den Wellen (3) des Verfahrensteils (1) koaxial drehfest verbünden sind, jede Abtriebswelle (11) ein Abtriebsritzel (12, 13) aufweist, benachbarte Abtriebswellen (11) durch axiale Versetzung ihrer Abtriebsritzel (12, 13) eine unterschiedliche Länge (L1, L2) zwischen ihrem den Verfahrensteil (1) zugewandten Ende und dem Abtriebsritzel (12, 13) aufweisen, die zum Verfahrensteil (1) hin oder davon weg versetzen Abtriebsritzel (12, 13) mit jeweils einem Sonnenzahnrad (18, 19) in ein Eingriff stehen und jedes Sonnenzahnrad (18, 19) mit einer Antriebswelle verbunden ist, **dadurch gekennzeichnet, dass** die Antriebswelle mit dem vom Verfahrensteil (1) weg versetzten Sonnenzahnrad (19) durch eine Torsionshohlwelle (21) und die Antriebswelle mit dem zum Verfahrensteil (1) hin versetzten Sonnenzahnrad (18) durch eine in der Torsionshohlwelle (21) angeordnete koaxiale Torsionsinnenwelle gebildet wird, wobei die Torsionshohlwelle (21) und die Torsionsinnenwelle (22) derart ausgebildet sind, dass der durch die unterschiedliche Länge (L1, L2) der Abtriebswellen (11) hervorgerufene Unterschied des Torsionsverdrehwinkels durch eine unterschiedliche Torsion der Torsionshohlwelle (21) und der Torsionsinnenwelle (22) ausgeglichen wird.

2. Getriebe nach Anspruch 1, **dadurch gekennzeichnet, dass** die Torsionshohlwelle (21) und die Torsionsinnenwelle (22) mit gleicher Winkelgeschwindigkeit in gleicher oder entgegengesetzter Drehrichtung antreibbar sind.

3. Getriebe nach Anspruch 2, **dadurch gekennzeichnet, dass** die in gleicher Drehrichtung antreibbare Torsionshohlwelle (21) und Torsionsinnenwelle (22) an ihrem von dem Verfahrensteil (1) abgewandeten Ende mit einem gemeinsamen Zahnrad (43) oder mit jeweils einem Zahnrad (35, 36) versehen sind.

4. Getriebe nach Anspruch 3, **dadurch gekennzeichnet, dass** die mit einem gemeinsamen Zahnrad (43) versehene Torsionshohlwelle (21) und Torsionsinnenwelle (22) an dem vom Verfahrensteils (1) abgewandten Ende drehfest miteinander verbunden sind.

5. Getriebe nach Anspruch 4, **dadurch gekennzeichnet, dass** das gemeinsame Zahnrad (43) drehfest mit der Torsionshohlwelle (21) verbunden ist und die Torsionsinnenwelle (22) einen Flansch (44) aufweist, der mit dem Zahnrad (43) drehfest verbunden ist.

6. Getriebe nach Anspruch 2, **dadurch gekennzeichnet, dass** die in entgegengesetzter Drehrichtung antreibbare Torsionshohlwelle (21) und Torsionsinnenwelle (22) jeweils mit einem Zahnrad (23, 24; 35, 36) versehen sind.

7. Getriebe nach einem der vorstehenden Ansprüche, **dadurch gekennzeichnet, dass** die dem Verfahrensteil (1) zugewandten Abtriebsritzel (12) und die vom Verfahrensteil (1) abgewandten Abtriebsritzel (13) jeweils sowohl mit dem Sonnenzahnrad (18) wie mit einem koaxialen innenverzahnten Hohlrad (28, 29) in Eingriff stehen.

8. Getriebe nach Anspruch 1 oder 7, **dadurch gekennzeichnet, dass** das Drehmoment auf die dem Verfahrensteil (1) zugewandten und die von dem Verfahrensteil (1) abgewandten Abtriebsritzel (12, 13) von dem Sonnenzahnrad (18, 19) oder dem Sonnenzahnrad (18, 19) und dem innenverzahnten Hohlrad (28, 29) anteilig verzweigt zugeführt wird.

9. Getriebe nach einem der vorstehenden Ansprüche, **dadurch gekennzeichnet, dass** die Nullpunktpositionierung an dem mit den Wellen (11) des Verfahrensteils (1) verbundenen Ende der Abtriebswellen (11) durch Formschluss oder Kraftschluss, mechanisch und/oder elektrisch koordinierbar ist.

10. Getriebe nach Anspruch 2 und 8, **dadurch gekennzeichnet, dass** bei in gleicher Drehrichtung antreibbaren Abtriebswellen (11) die mechanische Drehmomentverzweigung über eine elektrische Welle koordinierbar ist.

11. Getriebe nach einem der vorstehenden Ansprüche, **dadurch gekennzeichnet, dass** die dem Verfahrensteil (1) zugewandten Abtriebsritzel (12) und die von dem Verfahrensteil (1) abgewandten Abtriebsritzel (13) über jeweils einen Motor angetrieben werden.

## Claims

1. A gear box for driving an extruder having a processing section (1) with a plurality of axially parallel shafts (3) which are arranged along a circle at the same central angle distance and which are connected to treatment elements (4) so as to rotate therewith, with adjacent shafts (3) meshing with said treatment elements (4), wherein the gear box (7) has output shafts (11) which are coaxially connected to the shafts (3) of the processing section (1) so as to rotate therewith, each output shaft (11) has an output pinion (12, 13), adjacent output shafts (11) have different lengths (L1, L2) between their ends facing the processing section (1) and the output pinion (12, 13) due to an axial offset of their output pinions (12, 13), the output pinions (12, 13) offset towards or away from the processing section (1) each mesh with a sun gear (18, 19), and each sun gear (18, 19) is connected to a drive shaft, **characterized in that** the drive shaft with the sun gear (19) offset away from the processing section (1) is formed by a torsional hollow shaft (21), and that the drive shaft with the sun gear (18) offset towards the processing section (1) is formed by a torsional inner shaft which is coaxially arranged in said torsional hollow shaft (21), wherein the torsional hollow shaft (21) and the torsional inner shaft (22) are configured such that the difference of the torsion angle caused by the different lengths (L1, L2) of the output shafts (11) is compensated by a different torsion of the torsional hollow shaft (21) and the torsional inner shaft (22).

2. A gear box according to claim 1, **characterized in that** the torsional hollow shaft (21) and the torsional inner shaft (22) are drivable at the same angular speed in the same or opposite rotational direction.

3. A gear box according to claim 2, **characterized in that**, at their ends facing away from the processing section (1), the torsional hollow shaft (21) and the torsional inner shaft (22) drivable in the same rotational direction are provided with a common gear (43) or with one gear (35, 36) each.

4. A gear box according to claim 3, **characterized in that**, at the ends facing away from the processing section (1), the torsional hollow shaft (21) and the torsional inner shaft (22) provided with a common gear (43) are connected to each other for co-rotation.

5. A gear box according to claim 4, **characterized in that** the common gear (43) is connected to the torsional hollow shaft (21) so as to rotate therewith, and that the torsional inner shaft (22) has a flange (44) which is connected to the gear (43) so as to rotate therewith.

6. A gear box according to claim 2, **characterized in that** the torsional hollow shaft (21) and the torsional inner shaft (22) drivable in the opposite rotational direction are each provided with a gear (23, 24; 35, 36).

7. A gear box according to one of the preceding claims, **characterized in that** the output pinions (12) facing the processing section (1) and the output pinions (13) facing away from the processing section (1) are each in mesh with the sun gear (13) as well as with a coaxial, internal geared wheel (28, 29).

8. A gear box according to claim 1 or 7, **characterized in that** the torque is transferred onto the output pinions (12, 13) facing the processing section (1) and facing away from the processing section (1) by means of the sun gear (18, 19) or the sun gear (18, 19) and the internal geared wheel (28, 29), with the torque being divided proportionally.

9. A gear box according to one of the preceding claims, **characterized in that** the zero point positioning at the ends of the output shafts (11) connected to the shafts (11) of the processing section (1) can be coordinated by a form-fit or frictional connection, mechanically and/or electrically.

10. A gear box according to claim 2 or 8, **characterized in that**, in case of output shafts (11) which are drivable in the same rotational direction, the mechanical torque division can be coordinated via an electric shaft.

11. A gear box according to one of the preceding claims, **characterized in that** the output pinions (12) facing the processing section (1) and the output pinions (13) facing away from the processing section (1) are each driven by a motor.

## Revendications

1. Engrenage pour l'entraînement d'une extrudeuse qui présente une pièce de processus (1) comportant plusieurs arbres (3) axialement parallèles agencés le long d'un cercle avec le même écartement par rapport à l'angle au centre, lesquels sont reliés de manière solidaire en rotation avec des éléments d'usinage (4) avec lesquels s'engrènent des arbres (3) voisins, l'engrenage (7) présentant des arbres menés (11) qui sont coaxialement reliés de manière solidaire en rotation avec les arbres (3) de la pièce de processus (1), chaque arbre mené (11) présentant un pignon de sortie (12, 13), des arbres menés (11) voisins présentant par un décalage axial de leurs pignons de sortie (12, 13) une longueur différente (L1, L2) entre leur extrémité tournée vers la pièce de processus (1) et le pignon de sortie (12, 13), les pignons de sortie (12, 13) décalés vers la pièce de processus (1) et en éloignement de celle-ci étant chacun en engrenage avec une roue dentée solaire (18, 19) et chaque roue dentée solaire (18, 19) étant reliée à un arbre d'entraînement, **caractérisé en ce que** l'arbre d'entraînement avec la roue dentée solaire (19) décalée en éloignement de la pièce de processus (1) est formé par un arbre de torsion creux (21) et l'arbre d'entraînement avec la roue dentée solaire (18) décalée vers la pièce de processus (1) est formée par un arbre de torsion intérieur coaxial agencé dans l'arbre de torsion creux (21), l'arbre de torsion creux (21) et l'arbre de torsion intérieur (22) étant réalisés de telle sorte que la différence d'angle de torsion due à la différence de longueur (L1, L2) des arbres de sortie (11) est compensée par une torsion différente de l'arbre de torsion creux (21) et de l'arbre de torsion intérieur (22).

2. Engrenage selon la revendication 1, **caractérisé en ce que** l'arbre de torsion creux (21) et l'arbre de torsion intérieur (22) peuvent être entraînés avec la même vitesse angulaire dans le même sens de rotation ou dans le sens de rotation inverse.

3. Engrenage selon la revendication 2, **caractérisé en ce que** l'arbre de torsion creux (21) et l'arbre de torsion intérieur (22) qui peuvent être entraînés dans le même sens de rotation sont pourvus, à leur extrémité détournée de la pièce de processus (1), d'une roue dentée (43) commune ou d'une roue dentée (35, 36) respective.

4. Engrenage selon la revendication 3, **caractérisé en ce que** l'arbre de torsion creux (21) et l'arbre de torsion intérieur (22), pourvus d'une roue dentée (43) commune, sont reliés l'un à l'autre de manière solidaire en rotation à l'extrémité détournée de la pièce de processus (1).

5. Engrenage selon la revendication 4, **caractérisé en ce que** la roue dentée (43) commune est reliée de manière solidaire en rotation à l'arbre de torsion creux (21) et l'arbre de torsion intérieur (22) présente une bride (44) qui est reliée de manière solidaire en rotation à la roue dentée (43).

6. Engrenage selon la revendication 2, **caractérisé en ce que** l'arbre de torsion creux (21) qui peut être entraîné dans le sens de rotation opposé et l'arbre de torsion intérieur (22) sont chacun pourvus d'une roue dentée (23, 24 ; 35, 36).

7. Engrenage selon l'une des revendications précédentes, **caractérisé en ce que** le pignon de sortie (12) tourné vers la pièce de processus (1) et le pignon de sortie (13) détourné de la pièce de processus (1) sont chacun en engrènement tant avec la roue dentée solaire (18) qu'avec une, couronne (28, 29) à denture intérieure coaxiale.

8. Engrenage selon la revendication 1 ou 7, **caractérisé en ce que** le couple de rotation est introduit en proportion de manière divisée sur les pignons de sortie (12, 13) tournés vers la pièce de processus (1) et détournés de la pièce de processus (1) par la roue dentée solaire (18, 19) ou par la roue dentée solaire (18, 19) et la couronne (28, 29) à denture intérieure.

9. Engrenage selon l'une des revendications précédentes, **caractérisé en ce que** le positionnement au point zéro peut être coordonné par coopération de formes ou par coopération de forces, par la voie mécanique et/ou par la voie électrique, à l'extrémité des arbres menés (11) reliée aux arbres (11) de la pièce de processus (1).

10. Engrenage selon les revendications 2 et 8, **caractérisé en ce que** lorsque les arbres menés (11) peuvent être entraînés dans le même sens de rotation, la division mécanique du couple de rotation peut être coordonnée par un arbre électrique.

11. Engrenage selon l'une des revendications précédentes, **caractérisé en ce que** les pignons de sortie (12) tournés vers la pièce de processus (1) et les pignons de sortie (13) détournés de la pièce de processus (1) sont entraînés par un moteur respectif.
